# EUROPEAN PATENT APPLICATION

(11) **EP 3 657 146 A1**
(43) Date of publication of application: **27.05.2020**
(21) Application number: 18208142.2
(22) Date of filing: 23.11.2018
(51) Int. Cl.: G01L 19/06

(54) **DESIGN FOR CORROSION RESISTANT PRESSURE SENSOR USING CONTROLLED LEAK PRINCIPLE**

(71) Applicant: Amminex Emissions Technology A/S, 2860 Søborg (DK); ELTEK S.p.A., I-15033 Casale Monferrato (Alessandria) (IT)
(72) Inventor: JENKE, Marc Adam, 2500 Valby (DK); BIGLIATI, Marco, 15032 Borgo San Martino (IT)
(74) Representative: Samson & Partner Patentanwälte mbB

(57) **Abstract**

A device for measuring pressure of ammonia or a gas mixture comprising ammonia or another corrosive gas, the device comprising: a pressure sensor, a housing of the pressure sensor, wherein the pressure sensor comprises a membrane, the membrane separating an ammonia pressure space from a non-pressure space and having a side directly exposed to ammonia and being able to exhibit a physical response to ammonia pressure, and a transducer located in the non-pressure space and capable of converting the physical response of the membrane to ammonia pressure into a transmittable pressure signal, wherein a double sealing structure is provided between the ammonia pressure space and the non-pressure space having first and second sealings, wherein an intermediate space between the first and second sealings is in communication with outside the housing by means of an outlet.

## Description

### FIELD OF THE INVENTION

This invention relates to low-cost and durable sensor for measuring the pressure of ammonia - or other aggressive or corrosive gases - by ensuring that ammonia gas cannot leak from the pressurized zone (source) into the area of the sensor where the signal processing electronics in the sensor housing is located. The device and method may also be used for other systems or concepts where there is a desire for durable and low-cost measurement of the concentration or pressure of a corrosive gas.

### BACKGROUND OF THE INVENTION

Ammonia is a widely used chemical with many applications. One specific application is as reductant for selective catalytic reduction (SCR) of NOₓ in exhaust gas from combustion processes. Direct ammonia gas dosing for Selective Catalytic Reduction of NOx (SCR) provides means for significant performance benefits over conventional AdBlue systems¹. An ammonia storage method involving ad- or absorption of molecular ammonia in solid state can circumvent the safety hazard of pressurized liquid ammonia and enable the use of ammonia for mobile applications. When a gas, e.g. ammonia, is generated by thermal desorption from a heated storage material, it is critical to measure the pressure of the liberated ammonia to enable feedback to the heating controller. For automotive applications, it is particularly important to have durable hardware with low failure rate as well as low-cost components since this segment is very focused on price and quality.

As explained in this document, conventional automotive pressure sensors used for e.g. measuring hydraulic pressure of automotive fluids such as fuel or AdBlue® have shown challenges with durability when applied to ammonia gas due to ultra-low leaking of
¹ http://www.amminex.com/Files/Filer/amminex/Johannessen_CTI_conference_SCR_Systems_2010.pdf
ammonia from the point of measurement at membrane to the sensor electronics thereby leading to sensor failures in field trials.

Therefore, there is a need for a new method and device for durable ammonia gas pressure sensors and the present invention solves this problem with almost no added cost added to the conventional sensor types.

### SUMMARY OF THE INVENTION

The invention relates to a low-cost and durable pressure sensor for measuring ammonia gas pressure without having the risk of leaking of ammonia through/around the sealing material between the pressurized ammonia source and the signal-converting electronics in the sensor housing. Even at ultra-low leak rates well below normal requirements linked to e.g. gas safety the gas may over time-scale of months or even years corrode the sensor electronics and cause sensor failures. The present invention uses a principle of double sealing structure with a deliberately placed hole (venting leak) from the zone between the sealing structures to the surroundings to overcome the problem in a simple and low-cost way. The Controlled Leak Principle (CLP) is easy to implement, has very low added cost and has proven to solve the problem.

### GENERAL DESCRIPTION

Pressure sensors for high-volume automotive applications are typically made by via a ceramic sensor body with a pressure-sensitive membrane that "flexes" according to the pressure on the membrane. Via sensor element and compact electronics, the physical response of the membrane is converted into a signal that via wires can be transmitted out of the sensor housing to be connected to the main device needing or recording the signal. Conventional sensors used in e.g. automotive segment are used for measuring pressure of automotive fluids such as fuel or AdBlue® while these fluids are pumped to the point of use such as an injector that needs a certain hydraulic supply pressure in order to dose properly. The sensors typically use an O-ring to seal the interface between the fluid line or container where the sensor is to be mounted and the sensor itself. More importantly, an O-ring is located to avoid that the automotive fluid that is in contact with the measuring membrane gets in contact with the electronics of the sensor on the other side of the measuring membrane.

The recent use of ammonia in automotive applications has created a need for low-cost ammonia pressure sensors. Field tests have shown that conventional pressure sensors used for e.g. AdBlue systems generally are compatible with ammonia but long-term field testing has revealed a problem since fundamentally nothing is 100% tight: Ultra-low leaks of ammonia through/around the O-ring and the subsequent presence of ammonia even at very low concentration near the sensor electronics causes the sensor to fail over time due to corrosion. This have been observed with PCBs (printed circuit Boards) that are appropriately coated according to normal principles of manufacturing of electronics.

Different attempts to solve the problem were made, including e.g. epoxy sealing instead of O-rings as well as double O-rings (even if an O-ring alone was several orders of magnitude more tight than normal leak rate requirements). The challenge turned out to be that in the small sensor body and housing, even ultra-low leak rates may end up as a low but still undesired ammonia concentration level near the sensor electronics simply due the time scale of months in operation. It has been observed that the problem arises after 6-12 months of operation.

It was verified that the O-ring between the pressurized zone of the membrane and the reference side was tight in terms of fulfilling a normal leak rate target. But ultra-low leak still caused the slow build-up of ammonia concentration near the electronics that convert the membrane's response to pressure raise into a sensor signal.

The present invention solves the above-mentioned challenges by a so-called Controlled Leak Principle (CLP). The CLP solution is simple, low-cost and subsequent field tests have shown that the problem is solved. The sensor that is normally fitted with an O-ring between the ceramic sensor body and the sensor housing is redesigned, in some examples, to enable use of, for example, double O-rings sitting 'in series'.

A device for measuring pressure of ammonia gas or a gas mixture comprising ammonia or any other corrosive gas is provided. Examples of corrosive gasses other than ammonia are hydrogen chloride, nitrogen dioxide, sulfur dioxide. The device comprises a pressure sensor and a housing of the pressure sensor. The pressure sensor comprises a membrane, the membrane separating an ammonia pressure space from a non-pressure space and having a side directly exposed to ammonia and being able to exhibit a physical response to ammonia pressure. The pressure sensor further comprises a transducer located in the non-pressure space and capable of converting the physical response of the membrane to ammonia pressure into a transmittable pressure signal. A double sealing structure is provided between the ammonia pressure space and the non-pressure space. The double sealing structure has first and second sealings, wherein an intermediate space between the first and second sealings is in communication with outside the housing by means of an outlet.

In some embodiments, the transducer of the pressure sensor is susceptible to corrosion by ammonia, as mentioned above, even if standard coating for the transducer is applied.

In some embodiments, the double-sealing structure, by providing the outlet between the first and second sealings, ensures that even an ultra-low leak of the ammonia through the first sealing does not build-up pressure or concentration of ammonia (or pressure or concentration of gas containing ammonia) between the first and second sealings that could enable ammonia to pass the second sealing to the non-pressure space.

In some embodiments, the first and second sealings are two O-rings compatible with ammonia, wherein compatible with ammonia means that the O-rings are capable of withstanding ammonia without taking damage at concentrations to be expected in the field of use of the device.

The normal benefit of using two sealings, for example, two O-rings is even lower leak rates. However, the present invention does not intend to take advantage of the added ammonia leak protection that is provided by the second sealing (for example O-ring) because a controlled leak is made in the sensor body between the surroundings and the zone between the two sealings (for example O-rings). This provides means for diffusional dilution of any ammonia that may pass through/around the first O-ring because the surroundings have essentially zero ammonia concentration, which is now in fluid contact with the zone between the sealings (for example O-rings).

Therefore, an infinite diffusion sink is created to eliminate ammonia to build up on the "clean side" of the second sealing, for example, an O-ring and subsequently no contamination or corrosion can damage the electronics. The zone between the two sealings (for example O-rings) will contain normal ambient air and any ammonia leaking through the first O-ring will be diluted to the surroundings. The second sealings, for example implemented as O-ring, serves the purpose of keeping other normal undesired species - away form the electronics.

The term "surroundings" is not necessarily real environmental surroundings. It could also be creation of a controlled leak to a different type of process gas that is free of the corrosive gas and this process gas is then placed in fluid contact with the zone between the two sealing structures to prevent the migration of ammonia - or the any other corrosive gas - from the source or measurement point to the electronics of in the sensor housing.

As it will be shown with some examples below, the invention eliminates the problem of ammonia interfering with the pressure sensor and enables use of conventional sensor technology applied with ammonia gas in automotive segment. The lifetime of pressure sensors can be kept at the level required for the market. If the redesign of the sensor body/housing to accommodate a second sealing (for example: O-ring) is kept simple, then the added cost of a hole and the material for the second sealing (for example O-ring) is almost neglectable.

The present invention involves a device for a gas pressure sensor to measure pressure of ammonia - or other aggressive/corrosive gases or the pressure of a gas mixture comprising ammonia - by protecting the sensor electronics by a Controlled Leak Principle whereby the sensor is fitted with a double sealing structure in between which there is an intermediate space which is in communication with outside the housing by means of an outlet.

Different sealing rings or different sealing materials could be envisaged as the first and second sealing structure. This could be relevant in case the sealing, for example implemented as an O-ring, facing the corrosive gas is not compatible with the upper part of the sensor house facing the zone with the sensor electronics.

In some embodiments, the outlet is made as one or more holes through the wall of the housing with a total cross-section area having an equivalent hydraulic diameter of at least 1 µm, 10 µm, 0.1mm or 1mm.

In reality, the size of the hole(s) for controlled leak is, for example, limited by the following two factors:
- Minimum diameter (or equivalent dimension of a hydraulic diameter): Typically limited by production methods or machines. Holes smaller than 1 micro meter are typically not easy to manufacture. Typical hole size compatible with conventional manufacturing methods would be larger than 1 µm, 10 µm, 0.1mm or 1mm.
- Maximum diameter (or equivalent dimension of a hydraulic diameter): The space available in the device to enable a hole between O-rings. Typically, diameter of holes would be smaller than 5mm, 2.5mm, 1mm, 0.5mm or 0.1mm.

In a use-case example, a sensor with a normal internal O-ring protection was fully compatible AdBlue, which is also containing in liquid form some ammonia from decomposition of urea molecules. However, utilizing this for ammonia gas - even if all involved material exposed to ammonia gas was fully compatible with ammonia - turned out to give field issues after 6-9 months of operation on vehicles. The internal structure of the sensor was moderately modified to enable a second O-ring identical to the first one and in between those two rings, a hole with diameter of 1mm was made through the plastic housing into the void between the two O-rings. After testing this modified sensor in the lab for normal leak tightness, the sensor was then placed in field testing and the initial validation period of one year showed no failures like that of the conventional sensor and now the new sensor type has approx. two years of operating time in the field on automotive NOx reduction system using ammonia desorbed form solid storage media as the NOx reductant.

The pressure sensor is, for example, an essential part of the system for reducing NOx from exhaust gas as it may be used for the control of the heating of the solid material binging the ammonia to create a desorption pressure that may be measured by the sensor.

Any metal ammine salt - or similar types of material for ad- or absorbed ammonia - are relevant examples of applications where the device and method of this invention is particularly useful.

In some embodiments, the generation of the signal of the sensor's transducer is based on at least one of capacitive or inductive coupling, on a strain-resistive bending resistive effect and a piezoresistive and piezoelectric effect.

Stress on and deformation of the membrane the transducer sits upon, which is caused by ammonia pressure, is sensed by such sensors.

In some embodiments, the transducer comprises a printed circuit board. The printed circuit board may be used to transform the physical (electrical) signals caused by e.g. inductivity change, change of capacitance, piezoelectrically induced current flow or change of resistivity into normalized electrical signals or digital signals indicative of ammonia pressure.

In some embodiments, the membrane is attached to a fixture and the electronic transducer is also attached to the fixture. As such any deformation of the membrane relative to the fixture might be conveyed directly to the transducer that is also attached to the fixture and is, for example, attached also to the membrane. As such, in some embodiments, the transducer layer is a layer of material sensitive to strain or bending directly applied to the membrane.

In some embodiments, the pressure sensor is a differential pressure sensor. Differential pressure sensors measure differences of pressure levels, for example, a difference between a pressure in the above-mentioned non-pressure space and ammonia pressure space.

In some embodiments, the pressure sensor is a gauge pressure sensor measuring the pressure in the pressure space relative to the atmospheric pressure. Therein, the non-pressure space has a pressure-equilibration passage to the atmosphere downstream of the outlet between the first and second sealings and the second sealing.

The invention - implemented as a method or device - is particularly advantageous for solid ammonia storage system used for reduction of NOx by SCR catalysts in the exhaust of diesel vehicles or trucks (or similar applications requiring ammonia storage) powered by lean combustion engine.

In some embodiments, the pressure sensor is an absolute pressure sensor. An absolute pressure sensor typically measures the ammonium pressure relative to a vacuum pressure.

Furthermore, a system for reduction of NOx from exhaust gas whereby ammonia as the additive for NOx reduction is provided. The system comprises a solid storage media for ammonia, a heating device suitable to heat the solid storage media to desorb gaseous ammonia from the solid storage media and supply the desorbed ammonia to an SCR catalyst (as an example for a catalytic device) for the NOx reduction, and a controller with a pressure-measuring device as described above herein. The controller is to control the heating device on the basis of a pressure measurement of the ammonia pressure developed in response to heating of the solid storage media by means of the pressure-measuring device.

In this system the storage material of the solid ammonia storage media is, for example, a metal ammine complex, such as Sr(NH₃)₈Cl₂, Ca(NH₃)₈Cl₂, Mn(NH₃)₆Cl₂, Mg(NH₃)₆Cl₂, or mixtures thereof.

There is also provided a method of reducing NOx from lean exhaust gas whereby ammonia as the additive for NOx reduction. The method comprises:
- providing a solid storage media for ammonia,
- providing a heating device suitable to heat the solid storage media,
- providing a controller with a pressure-measuring device as described above herein,
- heating the solid storage media with the heating device to desorb gaseous ammonia from the solid storage media and suppling the desorbed ammonia to an SCR device for the NOx reduction,
- measuring the ammonia gas pressure developed in response to heating of the solid storage media by means of the pressure-measuring device,
- controlling the heating device based on the pressure measurement,
- suppling the desorbed ammonia to an SCR device for the NOx reduction.

It is also envisaged by the invention to use the dosed ammonia for NOx reduction from the exhaust of a combustion engine by way of Selective Catalytic Reduction (SCR).

Other features and use of the method or embodiments in similar applications that require controlled dosing of gas made available from a solid storage media are inherent in the methods disclosed or will become apparent to those skilled in the art from the following detailed description of embodiments and its accompanying drawings.

### BRIEF DESCRIPTION OF THE DRAWINGS

Fig. 1 shows the structure of a conventional sensor connected to the zone of gas for which the pressure is to be measured.
Fig. 2 shows an embodiment of the invention in the form of a sensor according to the Controlled Leak Principle (CLP).
Fig. 3 shows outline of additional embodiments of the CLP
Fig. 4 shows a schematic of the embodiments of the CLP as seen from the outside of the sensor housing.
Fig. 5 shows a schematic of an embodiment system for reduction of NOx from exhaust gas comprising a sensor according to the CLP shown in Figs. 1 to 4.
Fig. 6 shows a schematic flow chart of a method of reducing NOx from exhaust gas.

### DESCRIPTION OF EMBODIMENTS

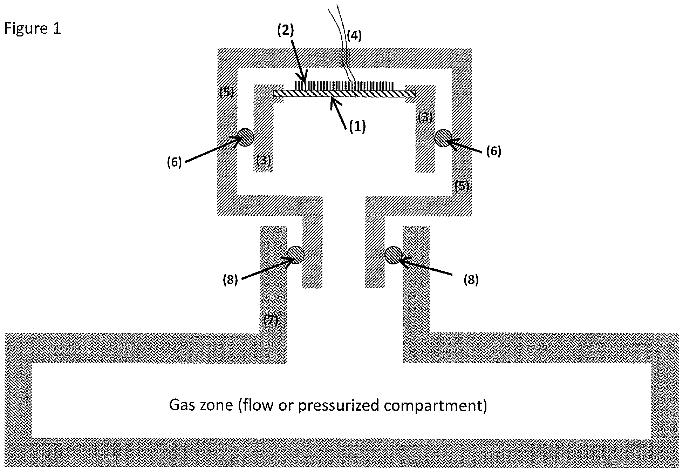

Figure 1 shows a typical layout of a conventional pressure sensor. The membrane (1) is placed in or on a ceramic body or fixture (3) with requires sensor/signal electronics (2) in a housing (5) and being in contact via wires (4) with the device (not shown) needing the signals. The sensor body (3) is placed in the housing (5) and has an O-ring (6) to avoid that the fluid media is getting into contact with the electronics (2). Furthermore, the sensor is typically mounted in contact with a gas zone such as a container or flow tube (7). Figure 1 is drawn in a form that is essentially rotationally symmetric - except for the illustration of the wires and the gas zone. As such the membrane is typically disc-shaped. There is an O-ring (8) to seal area where the sensor is mounted in a fluid line or container (7) but this part has no relation to the invention. The O-ring where even ultra-low leaking is problematic is the one labeled (6) and ammonia concentration may slowly build-up in the volume near the electronics (2).

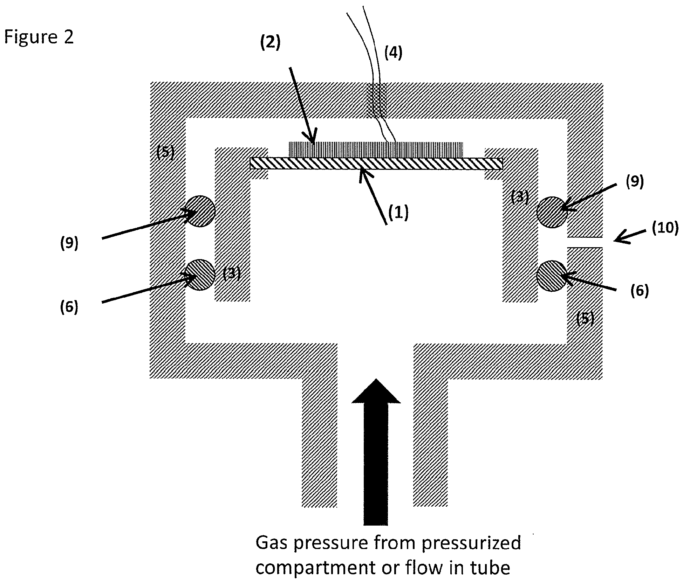

Figure 2 shows the sensor housing (5) with the sensor body (3), the membrane (1), the electronics (2), wires (4), the normally used O-ring (6) and finally, the solution according the invention: a second O-ring (9) and a controlled leak (10) to the surroundings through the sensor housing. Even if drawn in rotational symmetry, the leak (10) is not a 2D-slit but rather a hole. Therefore, the leak (10) is only drawn on one side of the drawing.

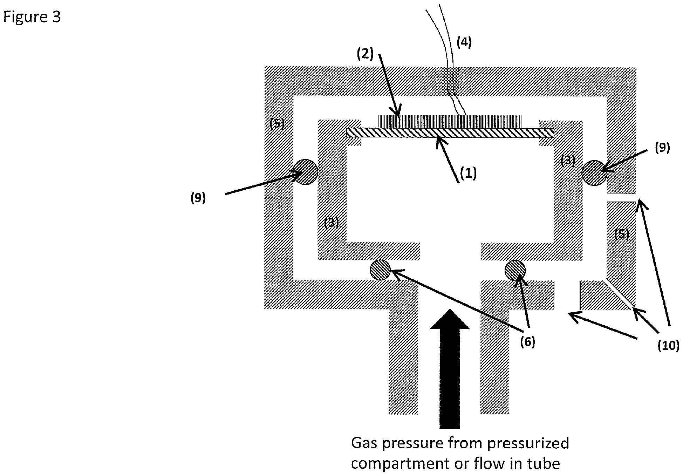

Figure 3 shows same type of embodiment in a sensor housing (5) but here as examples of simple variants of embodiments the hole is illustrated with three different combinations of diameter, angle and placement. Also, the placement of the two O-rings differ-merely to illustrate that it is not crucial for the invention where the O-rings are placed. Similarly, the size or placement of the holes providing the controlled leak to the surroundings through the sensor body is also not critical for achieving the effect of the invention.

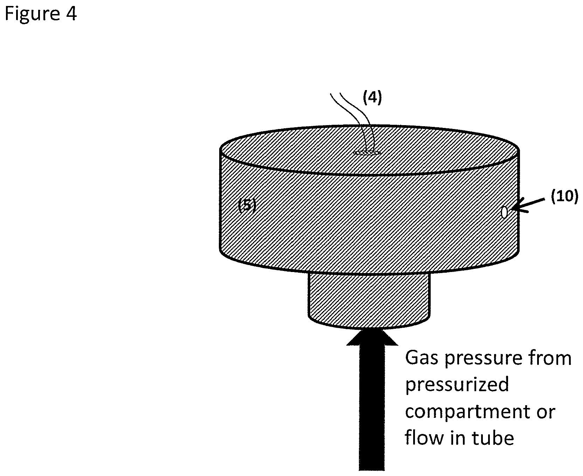

Figure 4 has been made to illustrate a placement of the controlled leak seen as a small hole (10) in the sensor housing (5) and the wires (4) coming up from the sensor unit.

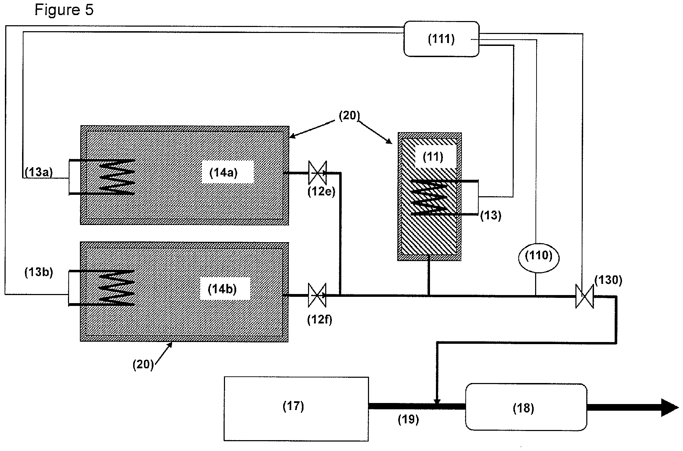

Figure 5 schematically shows a P-sensor (110), for example, the pressure measuring device described herein, which may be located in a SCR system where the engine (17) leads the exhaust (19) to the SCR catalyst (18) and ammonia may be dosed from a solid storage system. The system may contain one or more insulated (20) and heated (13, 13a, 13b) - by heating elements - storage units [small (11) or multiple big (14a, 14b)] with intermediate valves (112e, 112f) and dosing control HW that at least would function via a P-sensor (110) and a dosing valve (130) all being, for example, controlled by a controller (111). The P sensor may be critical for the control of the desorption of ammonia. Pressure may be generated by heating one or more solid units. The amount of extra valves and heaters may depend on the total number of storage units. The combination of dosing valves and/or use of P-sensor may be irrelevant in view of the invention described herein.

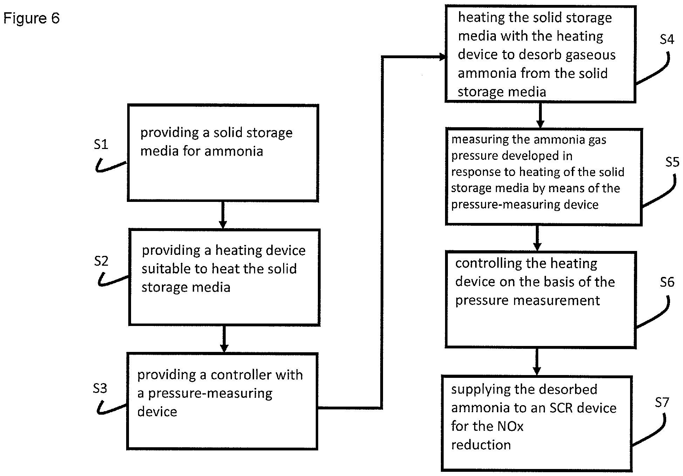

Figure 6 shows a schematic flowchart of a method of reducing NOx from lean exhaust gas whereby ammonia is used as additive for NOx reduction.

In activity S1, for example, a solid storage media for ammonia is provided. In activity S2, for example, a heating device suitable to heat the solid storage media is provided. In activity S3, for example, a controller is provided with a pressure measuring device. In activity S4, for example, the solid storage media is heated by the heating device to desorb gaseous ammonia from the solid storage media. In activity S5, for example, the ammonia gas pressure developed in response to heating of the solid storage media is measured by means of the pressure-measuring device. In activity S6, for example, the heating device is controlled on the basis of the pressure measurement. In activity S7, for example, the desorbed ammonia is supplied to an SCR device for the NOx reduction.

## Claims

1. A device for measuring pressure of ammonia or a gas mixture comprising ammonia or another corrosive gas, the device comprising:
a pressure sensor,
a housing of the pressure sensor,
wherein the pressure sensor comprises a membrane, the membrane separating an ammonia pressure space from a non-pressure space and having a side directly exposed to ammonia and being able to exhibit a physical response to ammonia pressure, and a transducer located in the non-pressure space and capable of converting the physical response of the membrane to ammonia pressure into a transmittable pressure signal, wherein a double sealing structure is provided between the ammonia pressure space and the non-pressure space having first and second sealings, wherein an intermediate space between the first and second sealings is in communication with outside the housing by means of an outlet.

2. The device according to claim 1 wherein the transducer is susceptible to corrosion by ammonia.

3. The device according to claim 1 or 2 where the double-sealing structure, by providing the outlet between the first and second sealings, ensures that even an ultra-low leak of the ammonia through the first sealing does not build-up pressure or concentration of ammonia between the first and second sealings that could enable ammonia to pass the second sealing to the non-pressure space.

4. The device according to any one of claims 1 to 3 where the first and second sealings are two O-rings compatible with ammonia.

5. The device according to any one of claims 1 to 4 where the outlet is made as one or more holes through the wall of the housing with a total cross-section area having an equivalent hydraulic diameter of at least 1 µm. 10 µm, 0.1mm or 1mm.

6. The device according to any one of claim 1 to 5 where the generation of the signal of the transducer is based on at least one of capacitive or inductive coupling, on a strain-resistive bending resistive effect, and a piezoresistive effect and piezoelectric effect.

7. The device according to any one of claim 1 to 6 where the transducer comprises a printed circuit board.

8. The device according to any one of claim 1 to 7 where the membrane is attached to a fixture and the electronic transducer is also attached to the fixture.

9. The device according to any one of claim 1 to 8 where the transducer is a layer of material sensitive to strain or bending directly applied to the membrane.

10. The device according to any one of claim 1 to 9 where the pressure sensor is a differential pressure sensor.

11. The device according to claim 10, where the pressure sensor is a gauge pressure sensor measuring the pressure in the pressure space relative to the atmospheric pressure, and wherein the non-pressure space has a pressure equilibration passage to the atmosphere downstream of the outlet between the first and second sealings and the second sealing.

12. The device according to any one of claim 1 to 7 where the pressure sensor is an absolute pressure sensor.

13. A system for reduction of NOx from lean exhaust gas whereby ammonia as the additive for NOx reduction, comprising
- a solid storage media for ammonia,
- a heating device suitable to heat the solid storage media to desorb gaseous ammonia from the solid storage media and supply the desorbed ammonia to an SCR catalytic device for the NOx reduction, and
- a controller with a pressure-measuring device according to any one of claims 1 to 12 to control the heating device based on a pressure measurement of the ammonia pressure developed in response to heating of the solid storage media by means of the pressure-measuring device.

14. A system according to claim 13 wherein the storage material of the solid ammonia storage media is a metal ammine complex, such as Sr(NH₃)₈Cl₂, Ca(NH₃)₈Cl₂, Mn(NH₃)₆Cl₂, Mg(NH₃)₆Cl₂, or mixtures thereof.

15. A method of reducing NOx from lean exhaust gas whereby ammonia as the additive for NOx reduction, comprising
- providing a solid storage media for ammonia,
- providing a heating device suitable to heat the solid storage media,
- providing a controller with a pressure-measuring device according to any one of claims 1 to 12,
- heating the solid storage media with the hearing device to desorb gaseous ammonia from the solid storage media
- measuring the ammonia gas pressure developed in response to heating of the solid storage media by means of the pressure-measuring device,
- controlling the heating device on the basis of the pressure measurement,
- suppling the desorbed ammonia to an SCR device for the NOx reduction.
